# EUROPEAN PATENT APPLICATION

(11) **EP 1 785 782 A2**
(43) Date of publication of application: **16.05.2007**
(21) Application number: 06023486.1
(22) Date of filing: 10.11.2006
(51) Int. Cl.: G03H 1/04, G03H 1/22

(54) **Security hologram and associated methods of use and of making**

(30) Priority: 10.11.2005 US 735923 P
(71) Applicant: E.I. du Pont de Nemours and Company, Wilmington, DE 19805 (US)
(72) Inventor: Molteni, Wiliam J., Nibley, Utah 84321 (US)
(74) Representative: Hughes, Andrea Michelle

(57) **Abstract**

A security hologram is described that contains an integral image, which is made up of at least a first holographic image (601), which is located at or near a surface of a recording medium (603) used to record the hologram, and a second holographic image (701), which is located in either a foreground position or a background position relative to the surface of the recording medium (702). The at least first and second holographic images fit together like pieces of a jigsaw puzzle to afford the integral image. The second holographic image is viewable and recognizable only with a collimated or at least partially collimated light source having a center wavelength in the visible region of the electromagnetic spectrum and a spectral bandwidth, wherein the spectral bandwidth of the collimated or at least partially collimated light source overlaps the spectral bandwidth of the hologram. Also described are associated methods of use of the hologram in security/authentication applications and a method of making the hologram.

## Description

### FIELD OF THE INVENTION

This invention pertains to a hologram having a first holographic image located at or near a surface of a recording medium used to record the hologram and a second holographic image that is located in either a foreground position or a background position relative to the surface of the recording medium. This invention also pertains to an associated method of use of the hologram in security and/or authentication applications and to a method of making the hologram.

### BACKGROUND OF THE INVENTION

Holography is a form of optical information storage. The general principles are described in a number of references, e.g., "Photography by Laser" by E. N. Leith and J. Upatnieks in SCIENTIFIC AMERICAN, 212, No. 6, 24-35 (June, 1965). In brief, the object to be photographed or imaged is illuminated with collimated light, e.g., from a laser, and a light sensitive recording medium, e.g., a photographic plate, is positioned so as to receive light reflected from the object. Each point on the object reflects light to the entire recording medium, and each point on the medium receives light from the entire object. This beam of reflected light is known as the object beam. At the same time, a portion of the collimated light is beamed by a mirror directly to the medium, by passing the object. This beam is known as the reference beam. What is recorded on the recording medium is the interference pattern that results from the interaction of the reference beam and the object beam impinging on the medium. When the processed recording medium is subsequently illuminated and observed appropriately, the light from the illuminating source is diffracted by the hologram to reproduce the wave-front that originally reached the medium from the object, so that the hologram resembles a window through which the virtual image of the object is observed in full three-dimensional form, complete with parallax.

In understanding holography and recording of holograms, one needs an understanding of the term "image plane". An image plane by definition is an area of focus and/or an area of attention of a 3-dimensional image. An image plane is also called a focal plane. For most photographic and holographic applications, it is often desired and targeted to have an image plane of a given recording be coincident with a surface of the recording medium; this coincidence normally corresponds to the image being recognizable and viewable with information contained therein being clearly seen.

Holograms that are formed by allowing the reference and object beams to enter the recording medium from the same side are known as transmission holograms and are also known as front beam holograms. Interaction of the object and reference beams in the recording medium forms fringes of material with varying refractive indices which are normal or near normal to the plane of the recording medium. When the hologram is played back by viewing with transmitted light, these fringes diffract the light to produce a viewable virtual image. Such transmission holograms may be produced by methods which are well known in the art, such as those disclosed in U.S. Patent No. 3,506,327; U.S. Patent No. 3,838,903 and U.S. Patent No. 3,894,787.

Holograms formed by allowing the reference and object beams to enter the recording medium from opposite sides, so that they are traveling in approximately opposite directions, are known as reflection holograms and are also known as back beam holograms. Interaction of the object and reference beams in the recording medium forms fringes of material with varying refractive indices which are, approximately, planes parallel to the plane of the recording medium. When the hologram is played back these fringes act as mirrors reflecting incident light back to the viewer. Hence, the hologram is viewed in reflection rather than in transmission. Since the wavelength sensitivity of this type of hologram is very high, white light may be used for reconstruction. Reflection holograms produced by an off-axis process are disclosed in U.S. Patent No. 3,532,406.

More and more, holograms as described above are being used as an enhanced security means attached to commercial products, such as digital optical disks, compact disks, batteries for electronic products, and any other product that may be susceptible to counterfeiting efforts. The use of a simple hologram(s) for identification and authentication purposes on such products is known. In the majority of references, such a hologram is a surface-relief hologram formed by a stamping process. This process may be incorporated into the manufacturing process of the product. There are disclosures of holograms (volume-phase hologram) being formed and applied to a product by way of a label. While using the simple hologram is advantageous for security devices, there is a significant drawback to this approach in that the simple hologram can be counterfeited and applied to non-authentic counterfeited products. Therefore, such a holographic stamp or label has limited value as an authenification and/or security device.

There is a significant need for a device that offers a higher level of security than described above. The present invention provides a solution for this important need.

### SUMMARY OF THE INVENTION

The present invention is directed to a security hologram recorded in a recording medium having a surface and containing an integral image, the hologram comprising a first holographic image, which is located and plays back at or near the surface of the recording medium and which is characterized to possess a first image plane and to possess a first center wavelength, and a second holographic image, which is located and plays back at a position with respect to the surface of the recording medium that is selected from the group consisting of a foreground position and a background position and which is characterized to possess a second image plane and to possess a second center wavelength, wherein at least a portion of the first holographic image and at least a portion of the second holographic image together afford the integral image.

The invention is further directed to a method for viewing a reconstructed image of a hologram recorded in a recording medium having a surface and containing an integral image, the hologram comprising a first holographic image, which is located and plays back at the surface of the recording medium and which is characterized to possess a first image plane and to possess a first center wavelength and a first spectral bandwidth, and a second holographic image, which is located and plays back at a position with respect to the surface of the recording medium that is selected from the group consisting of a foreground position and a background position and which is characterized to possess a second image plane and to possess a second center wavelength and a second spectral bandwidth;
wherein at least a portion of the first holographic image and at least a portion of the second holographic image together afford the integral image; said method comprising:
said method comprising:
   providing the hologram comprising the first holographic image and the second holographic image, wherein the second holographic image appears unrecognizable to the human eye under diffuse lighting sources; and
   illuminating the hologram with an at least partially collimated light source having a spectral bandwidth that overlaps the spectral bandwidth of the first holographic image and the spectral bandwidth of the second holographic image, wherein the image is viewable and recognizable to a human eye and is seen by the human eye as the integral image.

The invention is still further directed to a method for establishing the authenticity of an article containing a hologram recorded in a recording medium having a surface and containing an integral image, the hologram comprising a first holographic image, which is located and plays back at the surface of the recording medium and which is characterized to possess a first image plane and to possess a first center wavelength and a first spectral bandwidth, and a second holographic image, which is located and plays back at a position with respect to the surface of the recording medium that is selected from the group consisting of a foreground position and a background position and which is characterized to possess a second image plane and to possess a second center wavelength and a second spectral bandwidth;
wherein at least a portion of the first holographic image and at least a portion of the second holographic image together afford the integral image;
said method comprising the steps of:
(a) providing the hologram on an article to be authenticated, said hologram comprising the first holographic image and the second holographic image, wherein the second holographic image is located at a distance from the surface of the recording medium such that the second holographic image appears unrecognizable to a human eye under diffuse lighting sources;
(b) illuminating the hologram with an at least partially collimated light source having a center wavelength and a spectral bandwidth, wherein the spectral bandwidth of the at least partially collimated light source overlaps the first spectral bandwidth of the first holographic image and the second spectral bandwidth of the second holographic image; and
(c) establishing the article bearing the hologram to be authentic only if the integral image is observable by human observation or detectable by an instrument in its entirety upon illumination with the light source in step (b) positioned at least one angle θ with respect to a normal line to the surface of the hologram.

The invention is still further directed to a method for making a hologram, said hologram being recorded in a recording medium having a surface and containing an integral image, the hologram comprising a first holographic image, which is located and plays back at the surface of the recording medium and which is characterized to possess a first image plane and to possess a first center wavelength and a first spectral bandwidth, and a second holographic image, which is located and plays back at a position with respect to the surface of the recording medium that is selected from the group consisting of a foreground position and a background position and which is characterized to possess a second image plane and to possess a second center wavelength and a second spectral bandwidth;
wherein at least a portion of the first holographic image and at least a portion of the second holographic image together afford the integral image;
the method comprising the steps of:
a) obtaining a first transparency and at least a second transparency depicting all element(s) that are to be in the hologram;
b) placing a first photosensitive film suitable for holographic recording between the first transparency and a coherent light source, the first photosensitive film having a surface;
c) exposing the first photosensitive film with light from the coherent light source to record a first holographic image (1^{st} H1) of the first transparency;
d) inverting the first holographic image and removing the first transparency;
e) placing a second photosensitive film suitable for holographic recording between the at least second transparency and a coherent light source, the first photosensitive film having a surface;
f) exposing the first photosensitive film with light from the coherent light source to record a second holographic image (2^{nd} H1) of the second transparency;
g) inverting the second holographic image and removing the second transparency;
h) aligning and bonding the first holographic image to the at least second holographic image to afford a final H1 holographic image in a manner such that said final H1 holographic image contains the integral image;
i) placing a third photosensitive film suitable for holographic recording between the coherent light source and the final H1 holographic image, the third photosensitive film being proximate to the final H1 holographic image; and
j) exposing the third photosensitive film with light from the coherent light source to record a third holographic image (H2) as the hologram.

Preferred embodiments will now be described, by way of example only, with reference to the drawings.

### BRIEF DESCRIPTION OF THE DRAWINGS

FIG. 1 is an illustration of one holographic imaging technique for production of a reflection (back-beam) hologram.
FIGS. 2A & 2B are illustrations of an enlarged cross section of a photographic plate illustrating an example of the arrangement of fringes in the emulsion of a transmission (front-beam) hologram and reflection (back- beam) hologram.
FIG. 3 is an illustration of the reconstruction of an image from a reflection (back-beam) hologram.
FIG. 4 is an illustration of an arrangement for construction of a transmission (front-beam) or surface relief hologram.
FIG. 5 is an illustration of an arrangement useful in reconstructing a real orthoscopic image of a subject from a transmission (front-beam) hologram.
FIGs. 6-8 are illustrations of holographic imaging techniques as described in Example 1.
FIG. 9 is an illustration of LED illumination angles as described in Example 1.
FIGs. 10 and 11 are illustrations as described in Example 3.

### DETAILED DESCRIPTION OF THE INVENTION

The present invention is a hologram recorded in a recording medium and containing an integral image. The hologram comprises a first holographic image, which possesses a first image plane, and a second holographic image, which possesses a second image plane. The first image plane can be located at or near a surface of the recording medium. The second image plane is located either in a background position or a foreground position. The first and second holographic images together afford the integral image. The integral image is formed of the first and second holographic images like fitting together pieces of a jigsaw puzzle. The pieces may be curved, rectangular or of any shape that accomplishes an integral image. The image is viewable in totality for imparting security and/or authenification information and checks, etc., only under appropriate illumination conditions (as indicated herein). In another embodiment, at least a portion of the first holographic image and at least a portion of the second holographic image together afford the image.

The invention is also directed to a method for viewing a reconstructed image of a hologram wherein the method comprises: providing the hologram comprising the first holographic image and the second holographic image, wherein the second holographic image appears unrecognizable to the human eye under diffuse lighting sources; and illuminating the hologram with at least a partially collimated light source having a spectral bandwidth that overlaps the spectral bandwidth of the first holographic image and the spectral bandwidth of the second holographic image, wherein the image is viewable and recognizable to a human eye and is seen by the human eye as the integral image.

In yet another embodiment, the invention is directed to a method for establishing the authenticity of an article bearing a hologram containing an integral image and recorded in a recording medium having a surface, the hologram comprising a first holographic image, which is located and plays back at or near the surface of the recording medium and which is characterized to possess a first image plane and to possess a first center wavelength and a first spectral bandwidth, and a second holographic image, which is located and plays back at a position with respect to the surface of the recording medium that is selected from a foreground position and a background position and which is characterized to possess a second image plane and to possess a second center wavelength and a second spectral bandwidth;
wherein at least a portion of the first holographic image and at least a portion of the second holographic image together afford the integral image; said method comprises the steps of:
(a) providing the hologram on an article to be authenticated, said hologram comprising the first holographic image and the second holographic image, wherein the second holographic image is located at a distance from the surface of the recording medium such that the second holographic image appears unrecognizable to a human eye under diffuse lighting sources;
(b) illuminating the hologram with at least a partially collimated light source having a center wavelength and a spectral bandwidth, wherein the spectral bandwidth of the at least partially collimated light source overlaps the first spectral bandwidth of the first holographic image and the second spectral bandwidth of the second holographic image; and
(c) establishing the article bearing the hologram to be authentic only if the integral image is observable by human observation or detectable by an instrument in its entirety upon illumination with the light source in step (b) positioned at least one angle θ with respect to a normal line to the surface of the hologram.

The first and second wavelengths may independently be selected from, for example, the visible region of the electromagnetic spectrum, the infrared region of the electromagnetic spectrum, and the ultraviolet region of the electromagnetic spectrum.

In yet still another embodiment, the invention is a method for making a hologram, said hologram being recorded in a recording medium having a surface and thereby containing an integral image, the hologram comprising a first holographic image, which is located and plays back at or near the surface of the recording medium and which is characterized to possess a first image plane and to possess a first center wavelength and a first spectral bandwidth, and a second holographic image, which is located and plays back at a position with respect to the surface of the recording medium that is selected from the group of consisting of a foreground position and a background position and which is characterized to possess a second image plane and to possess a second center wavelength and a second spectral bandwidth; wherein at least a portion of the first holographic image and at least a portion of the second holographic image together afford the integral image;
the method comprises the steps of:
a) obtaining a first transparency and at least a second transparency depicting all element(s) that are to be in the hologram;
b) placing a first photosensitive film suitable for holographic recording between the first transparency and a coherent light source, the first photosensitive film having a surface;
c) exposing the first photosensitive film with light from the coherent light source to record a first holographic image (1^{st} H1) of the first transparency;
d) inverting the first holographic image and removing the first transparency;
e) placing a second photosensitive film suitable for holographic recording between the at least second transparency and a coherent light source, the first photosensitive film having a surface;
f) exposing the first photosensitive film with light from the coherent light source to record a second holographic image (2^{nd} H1) of the second transparency;
g) inverting the second holographic image and removing the second transparency;
h) aligning and bonding the first holographic image to the at least second holographic image to afford a final H1 holographic image in a manner such that said final H1 holographic image contains the integral image;
i) placing a third photosensitive film suitable for holographic recording between the coherent light source and the final H1 holographic image, the third photosensitive film being proximate to the final H1 holographic image; and
j) exposing the third photosensitive film with light from the coherent light source to record a third holographic image (H2) as the hologram.

One embodiment of the present invention utilizes holographic images manufactured by a volume reflection method used in the holographic industry for producing and reconstructing three-dimensional images from a hologram comprising forming a pattern of interference fringes on a photographic plate wherein the object-bearing beam and reference beam impinge on opposite sides of a photographic plate and reconstructing the image by illuminating the hologram with at least a partially collimated light source to view the reconstructed image. An at least partially collimated light source is a light source wherein at least some of the light is produced in a parallel beam of radiation. The at least partially collimated light source may be a non-coherent light source and has a spectral bandwidth that substantially overlaps the spectral bandwidth of the first holographic image and the spectral bandwidth of the second holographic image, wherein the reconstructed image is viewable and recognizable to a human eye as the integral image.

Another embodiment utilizes holographic images manufactured by an embossed method. Embossing methods are well known in the art of holographics.

The reconstructed image may be used as a security device for authenticity verification. The light source may be the light of a laser or other monochromatic collimated source. A reflection (back-beam) hologram behaves as a selective reflecting filter, reconstructing the image in a narrow band of wavelengths that appear as a single color. The particular spectral band that is visible in the reconstruction depends markedly on the geometry of construction. The reconstruction color tends to shift to a shorter wavelength because of distortion or shrinkage of the emulsion that changes the spacing of the interference fringe pattern. However, it is possible to control the amount of spectral shift by adjustment of the processing variables during development. Also, it is possible that multiple images and images using radiation of more than one wavelength can be stored in the hologram. It is possible to reconstruct multicolor images from reflection (back-beam) holograms viewed by reflection in white light, each color being selectively reflected from the hologram and combined in the image to yield a colored image that appears truly three-dimensional.

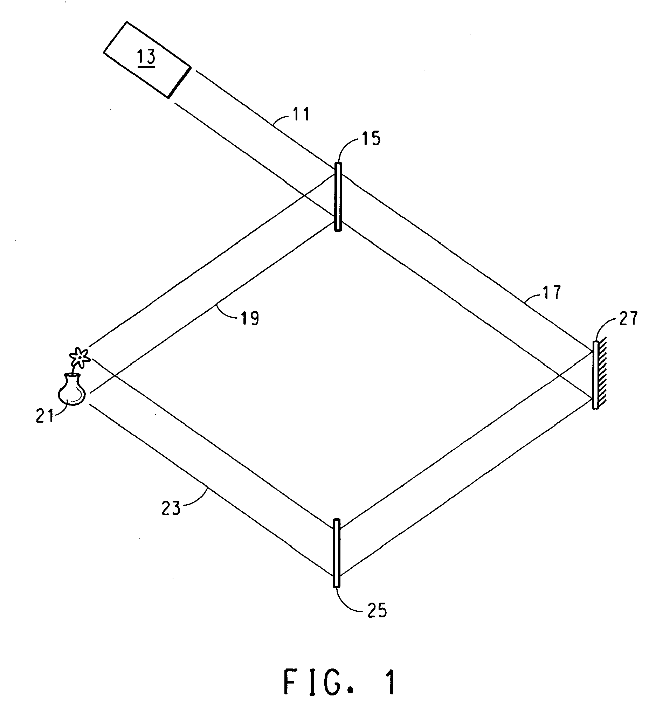

Further, referring to FIG. 1, the beam 11 from a source of collimated and coherent light 13 is divided by suitable means, such as a beam splitter 15, into a reference beam 17 and an incident beam 19. The incident beam 19 illuminates an object 21. The reflected light or object-bearing beam 23 from the object 21 passes to holographic recording medium (HRM, e.g., photographic or dichromated gelatin) plate 25. The reference beam 17 is directed onto the HRM plate 25 by suitable means such as a mirror 27, but strikes the plate 25 on the side opposite that is illuminated by the object-bearing beam 23. An interference pattern is produced and recorded in the HRM plate 25. Preferably, the path lengths of the reference beam 17 and object-bearing beams (19 and 23) beginning at the beam splitter 15 are about equal, although if the light is reasonably coherent this is unnecessary. Coherent sources of light produce electromagnetic radiation in which two or more sets of waves have a constant phase relationship. Usually, coherent sources of light are coherent only over a certain distance.

The arrangement for bringing the two beams (object-bearing and reference beams) onto opposite sides of the recording device may of course be varied considerably. Two separate sources of light may be even used as long as they are "locked in phase" (i.e., they are coherent with each other); and, of course, the optical devices used for directing the various beams may be selected for convenience.

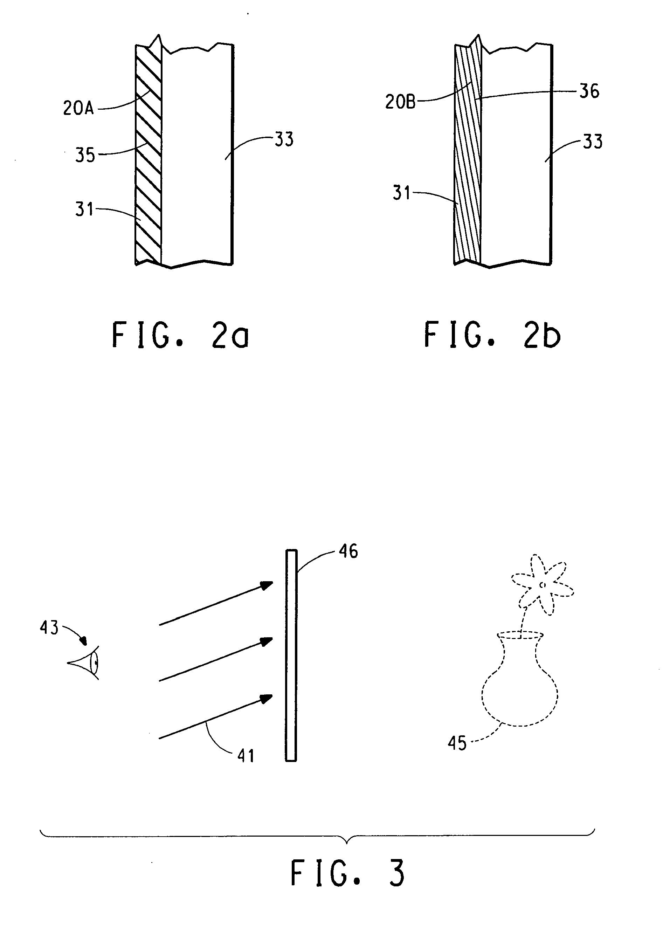

FIGS. 2a and 2b are a comparison of example fringe patterns (20A, 20B) produced in the emulsions of two photographic plates. FIG. 2a is an example of a transmission (front-beam) hologram and FIG. 2b is an example of a reflection (back-beam) hologram. These holograms were produced and then sectioned to determine the difference in the fringe patterns of the two methods. It is known that the interference pattern is produced by maxima and minima of the wave forms in the two light beams as they cross. In FIG. 2a the emulsion 31 is positioned on a transparent base 33 (such as glass). After exposure with the front beam technique, the developed plate was sectioned and examined under a microscope. The dark silver grains or fringes 35 in the emulsion 31 indicate points of interference maxima between the object bearing beam and reference beam, i.e., the antinodes of the standing waves. These fringes 35 are slanted about 30 to 40 degrees from a normal line to the surface of the photographic plate and depend largely on the angle between the two beams and the angle at which they strike the plane of the photographic plate. The angle is substantially parallel to a line that bisects the angle between the object-bearing beam and reference beam. The maximum angle permitted by the front-beam technique is limited by the refractive index of the emulsion 31 and consequently by the critical angle for total internal reflection, which for silver halide emulsions is about 40 degrees. In FIG. 2B, wherein a photographic plate was used to record a reflection (back-beam) hologram, the fringes 36 are within a few degrees of being parallel to an outer surface of the photographic plate and being substantially parallel to a line that bisects the angle formed between the object-bearing beam 23 and reference beam 17. These two holograms of FIGS. 2a and 2b may both be called specialized diffraction gratings, but it is obvious that their diffraction characteristics will be quite different. Thus, the reflection (back-beam) hologram can be reconstructed in reflected incoherent light, a property not shared by the transmission (front-beam) hologram.

FIG. 3 shows the reconstruction of an image from a reflection (back-beam) hologram 46. The hologram 46 is illuminated by reflection of incoherent light 41 (daylight or an incandescent light) and the viewer 43, although viewing a reflected image still sees the three-dimensional image 45 of the object 21 through the "hologram window", i.e., as if it were behind the hologram 46. If the emulsion did not shrink during processing of the plate, this image has the color of the light that was used to form the hologram. This method is further explained in U.S. Patent No. 3,532,406.

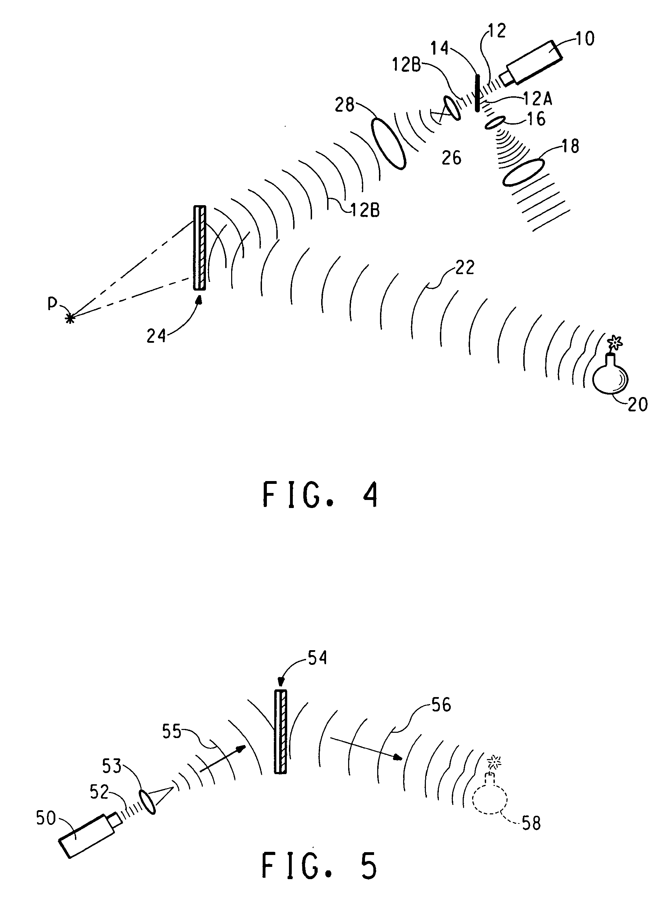

Another embodiment is a conventional surface relief method used by the holographic industry. A general embodiment is referenced here in below. FIG. 4 illustrates an arrangement wherein a conventional surface relief hologram is made. Coherent and collimated light 12 from laser 10 is divided into two components 12A and 12B by beam-splitter 14. Component 12A is directed through a telescopic arrangement containing lenses 16 and 18 to increase the cross section of light beam 12a. It illuminates subject 20. Subject 20 reflects and scatters light from illuminating beam 12A. Wave front 22 is a portion of the light reflected and scattered by subject 20. The form of wave front 22 is functionally related to subject 20. It is incident on a light-sensitive material 24 such as photographic plate. Wave front 22 contains optical information about subject 20. All the information needed to see a three-dimensional stereoscopic view of subject 20 is present therein.

Component 12B of coherent and collimated light 12 passes through a telescope comprising lenses 26 and 28 increasing its cross section and imparting a preselected shape to its waveform. Light beam 12B having a preselected waveform is used as a reference. The waveform of beam 12B should be reproducible. To this end it is made to converge on point P. Reference light beam 12B is also incident on light-sensitive surface 24. Interference between light in reference beam 12B and wave fronts 22 forms a complex diffraction pattern uniquely related to subject 20 on photosensitive surface 24. The pattern is a holographic image of subject 20. Holographic images or diffraction patterns are usually too complex to be viewed by normal direct observation in the way conventional photographs are viewed. A special illuminating technique is required to view an image of the subject.

FIG. 5 shows one method suited for illuminating the previously made holographic image 54 and forming a real orthoscopic image 58. Laser 50 emits coherent light 52. Lens 53 directs light 52 through focal point P forming a point source thereat and gives it a pre-selected waveform 55. Direction and waveform 55 of illuminating light beam 52 are selected so it represents a time reverse of the reference beam 12B used to make the hologram according to FIG. 4. Time reverse beam is a light beam having a direction and waveform, relating to a holographic image, so it appears to emanate from the point to which the original reference beam having the same waveform converged toward. Specifically, if reference beam 12B converged toward "p", beyond photosensitive surface 24, the time reverse of reference beam 12B is a light beam appearing, relative to holographic image 54, to emanate P having the same waveform as reference beam 12B. Hologram 54 is made by the method illustrated in FIG. 4. When time reverse illuminating light 55 is incident thereon, the holographic image pattern of hologram 54 diffracts a portion of light 55 into wave fronts 56. In the diffraction process wave fronts 56 are shaped by the holographic image to the same form that wave fronts 22 had. Wave fronts 56 travel in the opposite direction though. A real image 58 is formed by wave fronts 56. The real image 58 is pseudoscopic, i.e., appearing with the relief reversed. It can be recorded by placing a photographic material in the space occupied by the image. All the optical information originally transmitted by subject 20 in wave fronts 22 and incident on photosensitive surface 24 is present in image 58.

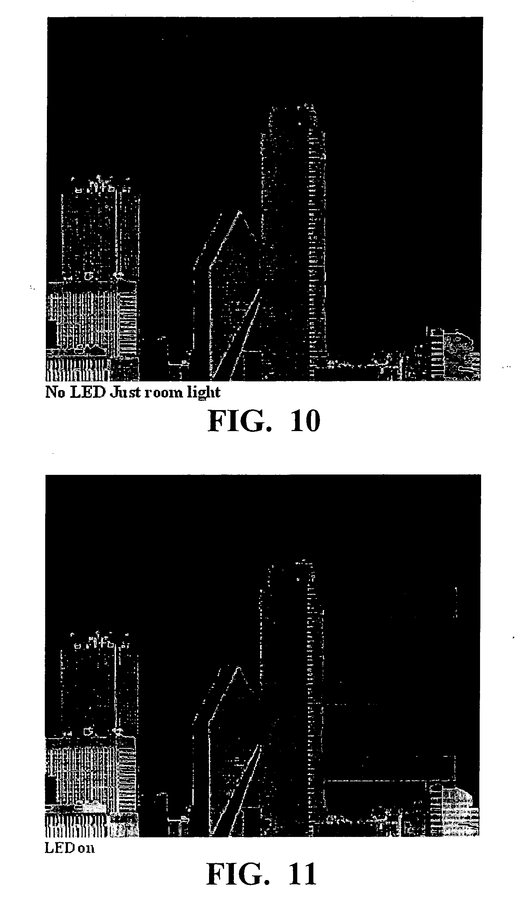

The present invention utilizes holographic imaging methods as described above, but the processes described are repeated to produce at least two holograms. The holograms are sandwiched together to form an integral image. Therefore, the positioning of the image elements should be considered. Typically at least one image element is positioned at the surface of the recording medium. Other image element(s) are then positioned at a (substantial) distance typically greater than 3.175 mm (1/8 inch) and all values found therein away from the film's surface. The latter positioning choice effectively obscures or hides at least a portion of the other image elements by taking advantage of the nature of volume reflection holograms to blur images in diffuse lighting conditions. Image reconstruction of the integral image of the hologram uses an illuminating light source that resembles the light source that the hologram was made with. The light source is positioned at an angle θ with respect to the normal line to the surface of the hologram in the range from about +35 degrees to about +75 degrees above normal when viewed at normal to the hologram. See Figure 9. The range includes all degrees and partial degrees contained therein. It is preferred that at least one angle θ with respect to the normal line to the surface of the holographic optical element is in the range from about +55 degrees to about -55 degrees including all degrees and partial degrees contained therein. Suitable light sources for viewing the integral holograms of this invention are those that provide collimated or at least partially collimated light in the visible region of the electromagnetic spectrum. Representative examples of suitable light sources include, but are not limited to, lasers, including laser pointers, and various LED pocket lights that provide collimated or near collimated light output. In one embodiment, a collimated source may be used; such example includes a laser. In another embodiment, quasi-monochrome color or near collimated point sources of light may be used, such as, a LED pocket light, or a diffused or expanded laser pointer. These sources are relatively inexpensive and fairly common. Their use makes the reconstructed image appear recognizable to an observer. Both horizontal and vertical movement of the laser pointer will result in a corresponding movement of the hidden images.

Preferably the suitable light sources for viewing integral images of the holograms of this invention have beam dimensions that are at least as large as the dimensions of the integral images being viewed. If a given light source, such as a laser, does not inherently produce a beam of suitable size, then expansion optics should be employed to obtain a sufficiently large size light beam for reconstruction of a given integral image.

At least parts of the second hologram in diffuse light exhibit source size defocusing and chromatic blur. The hologram replays with the greatest fidelity to the original model when the exact same wave front and wavelength are used to reconstruct the image as were used make it. Typically, a spherical wave coming from a point yields greatest fidelity. If the light source is enlarged or extended in one direction or another, the hologram, in effect, sees that source as an array of many points at slightly different angles. Each of these points is diffracted, guided out of the hologram at a correspondingly different angle and forms an image for each of these source points. These images generally overlap separated by the distance from the surface and the sine of the diffraction angle. From such a light source, a smear is created rather than one distinct image. The closer the image is to the hologram the smaller the distance to its adjacent image. If the image were to focus exactly on the surface there would be no separation of the images caused by the angle between the ends of the extended source and the image would appear sharp. Chromatic blur causes a similar effect when white or broadband light is used to illuminate a holographic label. White light is made up of different colors. Each of the colors diffract at a slightly different angle when emerging from the hologram. For each color a separate image is formed. Also, the further the image is from the surface of the film, the greater the separation between focused images. Each image is also of a slightly different color. They overlap and appear as a blur or smear of color. A volume hologram has some color filtering characteristics, but it is far from mimicking a laser. These two phenomena combine to further increase the blur.

In another embodiment the integral image is viewable in total (all component parts being viewable) when illumination of the hologram during playback is effected with a non-coherent light source having a center wavelength in the visible region of the electromagnetic spectrum and a spectral bandwidth, provided the spectral bandwidth of the non-coherent light source substantially overlaps the spectral bandwidth of the second holographic image.

Parallax positions of the foreground surface image and the background change with viewing location or tip of the hologram. Angle of illumination by the special light source can also move the background image to a position where it joins with an unmoving surface image to form an integral recognizable image.

### GLOSSARY

| | |
|---|---|
| At or near a surface | In this invention, an image is at or near a surface if the image is located within a distance of about 1 mm of the surface. |
| | |
| Background position | A position in which an image/image plane is located in back of an opposing side of the recording medium relative to the recited surface of the recording medium. |
| | |
| Foreground position | A position in which an image/image plane is located in front of a side of the recording medium that is defined by the recited surface of the recording medium. |

### EXAMPLES

A vibration isolated optical table equipped with one of two stable metal mounts (depending upon whether an H1 or H2 was being produced) was used for holographic imaging in these examples. The mount in use held a fresh, unexposed dichromated gelatin (DCG) coated glass plate (future H1 or H2) prior to each holographic exposure. Dichromated gelatin (DCG) is a common holographic recording material that is described in numerous references. See, for example, "Control of DCG and non silver holographic materials" by Rallison at the following website:
http://www.xmission.com/~ralcon/dcgprocess/p1.html.

### Example 1

This example illustrates a hologram of the invention in which the letters AS were holographically recorded near a surface of the recording medium as the first holographic image and the letter D was recorded as a second holographic image below the holographic recording medium; hence D was a background image. The integral image of this example is the following: DAS.

### H1 Masters

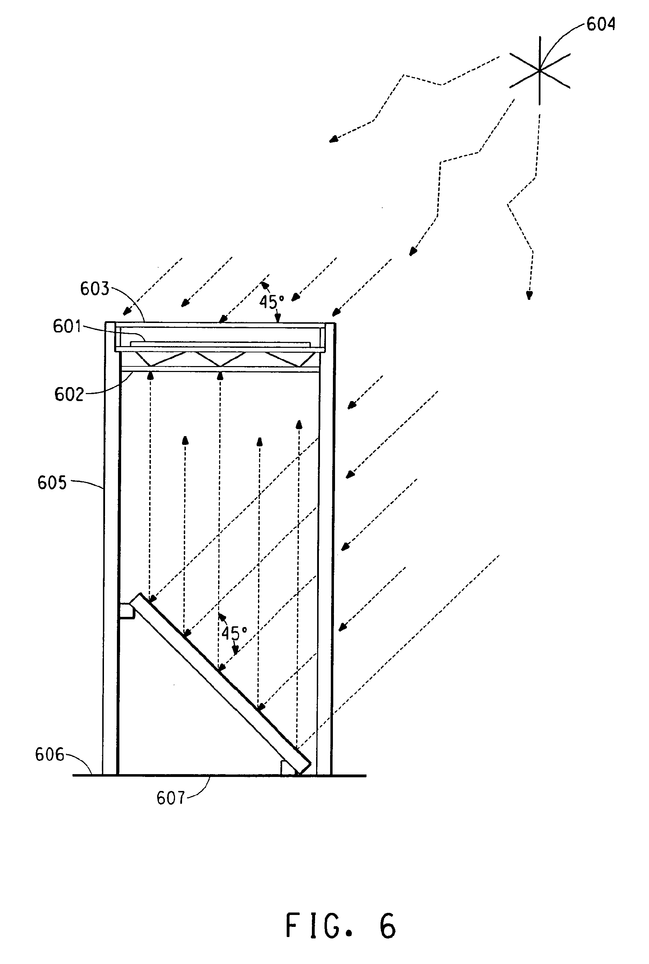

H1 masters were made in the following manner. Two positive transparencies were first produced from FONT artwork spelling the letters AS in one case and the letter D in another case. These two digital graphic files were then optically transferred to film transparencies by a common phototypesetting process. An Agfa SelectSet 7000 Drum Imagesetter (Agfa, Regional Offices: Ridgefield park, Ridgefield Park, NJ 07660) was used. The first transparency of AS (601) was then placed ~1.27 cm (0.5 inches) above a 5x5 " ground glass diffuser (602) and ~ 1.27 cm (0.5 inches) below a fresh, unexposed DCG (dichromated gelatin) plate (603). A holographic exposure was then done by flood illuminating with a "Coherent Sabre Argon laser" (604) 3 watts at 488 nm from the ground glass side. More specifically, with the laser shuttered, the (15.24 cm x 15.24 cm) (6"x6") DCG plate was placed ~1.27 cm (0.5") above the transparency, and a portion of the 488nm laser beam was used as a reference beam to back illuminate the transparency and the diffuser for the holographic imaging (in addition to a portion being the object beam). See Figure 6.

The ground glass diffuser used was a 3.175 mm (0.125 inch) thick window glass sand blasted on one side with Cyclone Manufacturing Brown Aluminum Oxide 150-180 grit. (A ground glass diffuser can be made in several ways. In this case, sand blasting of one side of a 3.175 mm (1/8 inch) thick ordinary window glass was utilized. No directly transmitted light or specular reflections should remain after blasting.) Additional features shown in Figure 6 sre listed below:
605 - mount for mirror, diffuser, transparency and DCE,
606 - vibration isolation table, and
607-- front surface mirror at 45° to horizontal.

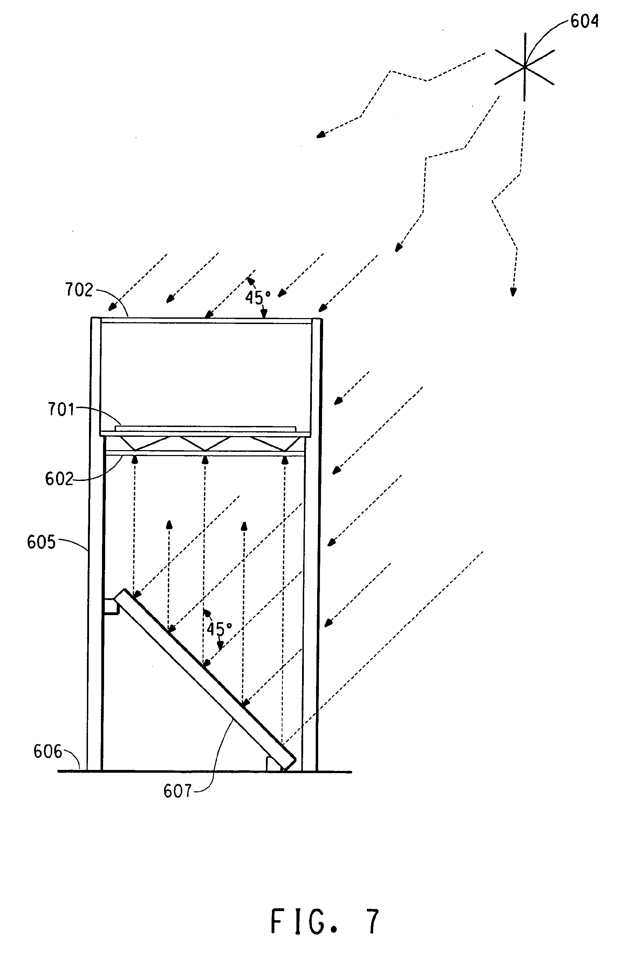

Next, the second transparency of the letter D (701) was holographically exposed in the same manner as given above for the letters AS, except that the second transparency was positioned further apart from a fresh, unexposed DCG plate (702). For exposure of the letter D, the second transparency was ~ 4 inches below the DCG plate and ~1.27 cm (.5 inches) above the ground glass diffuser. See Fig 7. Other features of the optical table are consistent with Figure 6.

In making the above D and AS holographic images, the D and the AS were positioned in the two transparencies such that when the two transparencies were overlayed in a certain way that the image seen in sequence is DAS.

### Chemical Processing

After a given exposure, the exposed DCG (Dichromated Gelatin), a common holographic recording material, plate was placed in a Kodak fixer bath for 45-60 seconds. It was then placed immediately into 26.7 - 48.9°C (80-120 degree F) water for ~ 4 seconds and in another water bath at 26.7 - 48.9°C (80 to 120 degrees F) for 4 seconds. Next, it went into an 80% isopropyl alcohol 20% water bath at 54.4 - 60 °C (130-140 degrees F) for 4 seconds. It then went into 2 sequential 100% alcohol baths at 54.4 - 60 °C (130-140 F) for 2 seconds each. Then the exposed DCG plate was dipped into a final 100% alcohol bath for several seconds, which was sufficiently long enough to allow the plate to be slowly removed from the bath to promote even drainage and drying.

### Combined H1 Master

After both the AS and D H1 masters were processed, they were then laminated together with UV curing adhesive and became a combined H1 having two different holographic images. At this point, the first two DCG holograms (i.e., the letter D and the letters AS) have been recorded, processed, and laminated together as the combined H1.

### H2 Master

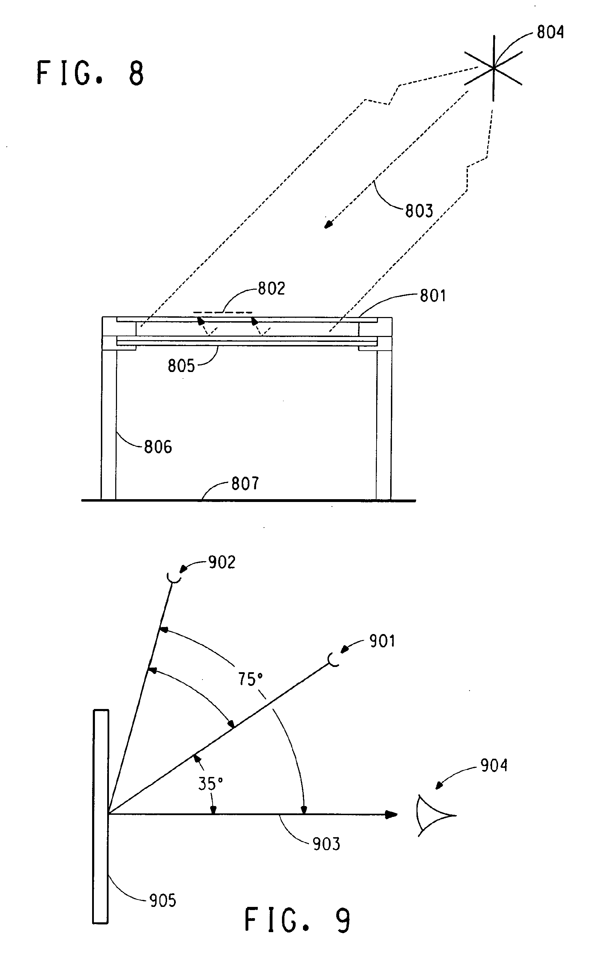

The combined H1 (805) was then subjected to reverse conjugate illumination, holographically copied (as given supra) into a third DCG plate (801), and processed as above to afford a H2. More specifically, a third unexposed DCG plate (future H2) was placed in a position of being a virtual peudoscopic image of the letters AS (802) for this holographic copying, such that the AS image was recorded in the DCG essentially at the DCG-air interface surface of the DCG plate. This resulted in the D being recorded as a virtual image ∼ 10.16 cm ( 4 inches) below the DCG plate (as a background image) upon holographic copying. See Figure 8. This H2 was viewed with conjugant illumination (803) so that the "D" would be below the hologram's surface and blurred in room light, but sharp enough to be legible when illuminated with a special light source (804) and form the company initials "DAS" when seen with the near surface, already sharper "AS". Other features in Figure 8 include holder and mount (806) and vibration isolation table (807).

### D2 Playback Characteristics

The playback and viewing characteristics of this D2 (905) were then determined. In room light, the letters AS were visible and recognizable to the human eye but not the letter D. When an appropriate source expanded Laser or LED illuminated the hologram at the correct replay angle distance, all three letters "DAS" were legible/readable. More specifically, the replay angles that afforded a legible/readable D in this example were found to be from approximately +35 degrees (901) to approximately +75 (902) above normal (903) when viewed (904) at normal to the hologram and when an orange LED (having a peak wavelength at 594 nm) was used as light source for playback. These angular relationships are shown in Figure 9.

### Example 2 (Prophetic)

This example further illustrates another "puzzle" hologram according to the invention. This example involves the word "DuPont" and the DuPont logo - the word "DuPont" within an oval. This example is done in the same manner as for Example 1, except that the word "DuPont" is recorded as the first holographic image (which is a surface image) instead of the letters "AS" and the oval (alone, without the word DuPont) of the DuPont logo is recorded as the second holographic image - (either as a background image or a foreground image) instead of the letter "D". An H2 master hologram is obtained using the methodology of Example 1. The word "DuPont" is visible and recognizable to the human eye in room light with the viewing angles and illumination being as in Example 1. When the orange LED light as used in Example 1 is substituted for room-light, not only is the word "DuPont" visible and recognizable to a human eye but also the oval is visible and recognizable, and a viewer viewing the H2 master hologram along a normal line sees the famous DuPont oval as a complete integral image of this hologram.

### Example 3 (Prophetic)

This example is similar to that of Example 2 with the difference being that a cityscape and parts of a letter E make-up the "puzzle" hologram instead of the word "DuPont" and an oval. This example is executed using the methodology of Example 1. In this example, the first holographic image is a cityscape made up of tall vertical box-like skyscrapers (Figure10) and is recorded as a surface image. The last building on the right of the city is a narrow tall building. This cityscape image is viewable in room light (which is non-collimated). In this example, the second holographic image consists of 3 horizontal bars of thickness equal to that of the right hand building. The center horizontal bar is not as wide or as long as the top and bottom horizontal bars. When an LED of the type specified in Example 1 is used for illuminating the H2 hologram at the correct angle, three horizontal bars are prophesized to be viewable under these illumination conditions and they can have approximately the same vertical thickness as the right hand building; these bars are the second holographic image. Together with the building they form the letter E and constitute the integral image of this example. This "puzzle" hologram could be the logo for a company whose name starts with the letter E, for example, EDISON. Now an observer sees as the complete integral image of this hologram as the cityscape and the logo E (Figure 11).

## Claims

1. A hologram recorded in a recording medium having a surface and containing an integral image, the hologram comprising a first holographic image, which is located and plays back at or near the surface of the recording medium and which is **characterized** to possess a first image plane and to possess a first center wavelength, and a second holographic image, which is located and plays back at a position with respect to the surface of the recording medium that is selected from the group consisting of a foreground position and a background position and which is **characterized** to possess a second image plane and to possess a second center wavelength, wherein at least a portion of the first holographic image and at least a portion of the second holographic image together afford the integral image.

2. The hologram of Claim 1 wherein the first holographic image and the second holographic image together afford the integral image.

3. The hologram of Claim 1 wherein the second holographic image is located at a foreground or background position and illumination of the second holographic image during playback is effected with an at least partially collimated light source having a center wavelength in the visible region of the electromagnetic spectrum and a spectral bandwidth, wherein the spectral bandwidth of the at least partially collimated light source at least partially overlaps the spectral bandwidth of the second holographic image.

4. The hologram of Claim 1 wherein the first and second center wavelengths are in the visible region of the electromagnetic spectrum.

5. The hologram of Claim 1 wherein the first and second center wavelengths are in the infrared region of the electromagnetic spectrum.

6. The hologram of Claim 1 wherein the first and second center wavelengths are in the ultraviolet region of the electromagnetic spectrum.

7. The hologram of Claim 1 wherein the first and second center wavelengths are the same.

8. The hologram of Claim 1 wherein the first and second center wavelengths are different.

9. The hologram of Claim 1 wherein the integral image is viewable as a complete, recognizable, and readable image by an observer viewing the hologram at an angle of zero degrees or near zero degrees with respect to a normal line of the first and/or second image planes.

10. The hologram of Claim 1 wherein the integral image is read or detected as a complete, recognizable, and readable image by a measuring device having a sensor directed at the hologram at an angle of zero degrees or near zero degrees with respect to a normal line of the first and/or second image planes.

11. The hologram of Claim 1 wherein the first and second image planes of the first and second holographic images, respectively, are parallel or nearly parallel to each other.

12. A method for viewing a reconstructed image of a hologram recorded in a recording medium having a surface and containing an integral image, the hologram comprising a first holographic image, which is located and plays back at or near the surface of the recording medium and which is **characterized** to possess a first image plane and to possess a first center wavelength and a first spectral bandwidth, and a second holographic image, which is located and plays back at a position with respect to the surface of the recording medium that is selected from the group consisting of a foreground position and a background position and which is **characterized** to possess a second image plane and to possess a second center wavelength and a second spectral bandwidth;
wherein at least a portion of the first holographic image and at least a portion of the second holographic image together afford the integral image; said method comprising:
providing the hologram comprising the first holographic image and the second holographic image, wherein the second holographic image appears unrecognizable to the human eye under diffuse lighting sources; and
illuminating the hologram with an at least partially collimated light source having a spectral bandwidth that at least partially overlaps the spectral bandwidth of the first holographic image and the spectral bandwidth of the second holographic image, wherein the image is viewable and recognizable to a human eye and is seen by the human eye as the integral image.

13. The method of Claim 12 wherein the hologram is formed by a volume reflection method.

14. The method of Claim 12 wherein the hologram is formed by an embossed method.

15. A method for establishing the authenticity of an article containing a hologram recorded in a recording medium having a surface and containing an integral image, the hologram comprising a first holographic image, which is located and plays back at or near the surface of the recording medium and which is **characterized** to possess a first image plane and to possess a first center wavelength and a first spectral bandwidth, and a second holographic image, which is located and plays back at a position with respect to the surface of the recording medium that is selected from the group consisting of a foreground position and a background position and which is **characterized** to possess a second image plane and to possess a second center wavelength and a second spectral bandwidth;
wherein at least a portion of the first holographic image and at least a portion of the second holographic image together afford the integral image;
said method comprising the steps of:
(a) providing the hologram on an article to be authenticated, said hologram comprising the first holographic image and the second holographic image, wherein the second holographic image is located at a substantial distance from the surface of the recording medium such that the second holographic image appears unrecognizable to a human eye under diffuse lighting sources;
(b) illuminating the hologram with an at least partially collimated light source having a center wavelength and a spectral bandwidth, wherein the spectral bandwidth of the at least partially collimated light source overlaps the first spectral bandwidth of the first holographic image and the second spectral bandwidth of the second holographic image; and
(c) establishing the article bearing the hologram to be authentic only if the integral image is observable by human observation or detectable by an instrument in its entirety upon illumination with the light source in step (b) positioned at least one angle θ with respect to a normal line to the surface of the holographic optical element.

16. The method of Claim 15 wherein the center wavelength is in the visible region of the electromagnetic spectrum.

17. The method of Claim 15 wherein the second holographic image is located at a distance of at least 1/8 inch from the surface of the recording medium.

18. The method of Claim 12 wherein the second holographic image is located at a distance of at least 1/8 inch from the surface of the recording medium.

19. The method of Claim 15 wherein the at least one angle θ with respect to the normal line to the surface of the holographic optical element is in the range from about +55 degrees to about -55 degrees including all degrees and partial degrees contained therein.

20. A method for making a hologram, said hologram being recorded in a recording medium having a surface and containing an integral image, the hologram comprising a first holographic image, which is located and plays back at or near the surface of the recording medium and which is **characterized** to possess a first image plane and to possess a first center wavelength and a first spectral bandwidth, and a second holographic image, which is located and plays back at a position with respect to the surface of the recording medium that is selected from the group consisting of a foreground position and a background position and which is **characterized** to possess a second image plane and to possess a second center wavelength and a second spectral bandwidth;
wherein at least a portion of the first holographic image and at least a portion of the second holographic image together afford the integral image;
the method comprising the steps of:
a) obtaining a first transparency and at least a second transparency depicting all element(s) that are to be in the hologram;
b) placing a first photosensitive film suitable for holographic recording between the first transparency and a coherent light source, the first photosensitive film having a surface;
c) exposing the first photosensitive film with light from the coherent light source to record a first holographic image (1^{st} H1) of the first transparency;
d) inverting the first holographic image and removing the first transparency;
e) placing a second photosensitive film suitable for holographic recording between the at least second transparency and a coherent light source, the first photosensitive film having a surface;
f) exposing the first photosensitive film with light from the coherent light source to record a second holographic image (2^{nd} H1) of the second transparency;
g) inverting the second holographic image and removing the second transparency;
h) aligning and bonding the first holographic image to the at least second holographic image to afford a final H1 holographic image in a manner such that said final H1 holographic image contains the integral image;
i) placing a third photosensitive film suitable for holographic recording between the coherent light source and the final H1 holographic image, the third photosensitive film being proximate to the final H1 holographic image; and
j) exposing the third photosensitive film with light from the coherent light source to record a third holographic image (H2) as the hologram.
